(19) Europäisches Patentamt / European Patent Office / Office européen des brevets

(11) **EP 2 144 096 B1**

(12) **EUROPEAN PATENT SPECIFICATION**

(45) Date of publication and mention of the grant of the patent:
**13.01.2016  Bulletin 2016/02**

(51) Int Cl.:
***G02B 6/028*** *(2006.01)*      *G02B 6/02* *(2006.01)*

(21) Application number: **09075278.3**

(22) Date of filing: **29.06.2009**

(54) **Method for selecting multimode optical fibres**

Verfahren zur Auswahl von Mehrmodenlichtwellenleiter

Méthode de sélection de fibres optiques multimodes

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.07.2008  FR 0803873**

(43) Date of publication of application:
**13.01.2010  Bulletin 2010/02**

(73) Proprietor: **Draka Comteq B.V.
1083 HJ Amsterdam (NL)**

(72) Inventors:
 • **Gholami, Asghar
   91440 Bures sur Yvette (FR)**
 • **Molin, Denis
   91210 Draveil (FR)**
 • **Sillard, Pierre
   78150 Le Chesnay (FR)**
 • **Lumineau, Yves
   95220 Herblay (FR)**

(74) Representative: **Algemeen Octrooi- en Merkenbureau B.V.
P.O. Box 645
5600 AP Eindhoven (NL)**

(56) References cited:
   **EP-A- 1 101 744      EP-A- 1 498 753
   WO-A-03/025645      US-A1- 2007 172 182**

 • **YAM S S-H ET AL: "HIGH-SPEED DATA TRANSMISSION OVER A 1 KM BROAD WAVELENGTH WINDOW MULTIMODE FIBER" OPTICS LETTERS, OSA, OPTICAL SOCIETY OF AMERICA, WASHINGTON, DC, US, vol. 31, no. 13, 1 July 2006 (2006-07-01), pages 1954-1956, XP001249580 ISSN: 0146-9592**

**Description**

The present invention relates to the field of optical fibre transmissions, and more specifically, to multimode fibres used for short-distance optical transmission systems requiring a large bandwidth.

Multimode fibres are currently used for short-distance applications and local networks. The core of a multimode fibre generally has a diameter of approximately 50 $\mu$m and a numerical aperture greater than 0.2, compared to 8 to 9 $\mu$m and 0.12 for the core of a single-mode fibre. Thus, for a particular wavelength, several optical modes propagate simultaneously along the fibre, carrying the same information. The bandwidth is directly linked to the group velocity of the optical modes propagating in the multimode core of the fibre. In order to guarantee a high bandwidth, it is necessary for the group velocities of all the modes to be identical; in other words that the intermodal dispersion, i.e. for the difference in group velocity between the slowest mode and the fastest mode to be zero, or at least minimized, for a particular wavelength. Multimode fibres have been the subject of international standardization under standard ITU-T G.651 which in particular defines criteria for bandwidths, numerical aperture, core diameter which relate to the requirements for compatibility between fibres.

In order to reduce the intermodal dispersion in a multimode fibre, it has been proposed since the 1970s to produce fibres with a graded index with a parabolic core profile. Such a fibre has been used for many years and its characteristics have been described in particular in the publications "Multimode theory of graded-core fibres" by D. Gloge et al., Bell System Technical Journal 1973, pp 1563-1578, and "Pulse broadening in graded-index optical fibers" by Olshansky et al., Applied Optics, Vol. 15, No. 2, Feb 1976.

A graded-index profile can be defined by a relationship between the refractive index value n at a point as function of the distance r from this point to the center of the fiber:

$$n = n_1 \sqrt{1 - 2\Delta\left(\frac{r}{a}\right)^\alpha}$$

with $\alpha \geq 1$;
$n_1$, the maximum refractive index of the multimode core of the optical fiber;
a, the radius of the multimode core of the optical fiber; and

$$\Delta = \frac{\left(n_1^{\ 2} - n_0^{\ 2}\right)}{2n_1^{\ 2}}$$

where $n_0$ is the minimum refractive index of the multimode core, generally corresponding to the refractive index of the cladding (most often made of silica).

A multimode fiber with a graded index therefore has a refractive index profile of the core with a rotational symmetry such that along any radial direction the value of the refractive index decreases continuously from the center of the fiber to its periphery. These refractive index curves are generally representative of the theoretical or target profile of the fiber, the manufacturing constraints of the fiber possibly leading to a slightly different profile.

When a light signal propagates in such a core having a graded index, the different modes experience a different propagation medium, which affects their speed of propagation differently. By adjusting the value of the parameter $\alpha$, it is thus possible to theoretically obtain a group velocity which is virtually equal for all the modes and thus a reduced intermodal dispersion for a particular wavelength. A value of the parameter $\alpha$ comprised between 1.8 and 2.2 allows a satisfactory limitation of the modal dispersion.

An optimum value of the parameter $\alpha$ is however valid for a particular wavelength only. Document US-B-6,363,195 proposes to compensate for the modal dispersion by using a concatenation of multimode fibers in order to optimize the bandwidth for two transmission windows, one centered on 850 nm and the other on 1300 nm. This document proposes to use a length of a first multimode fiber having a value of parameter $\alpha_1$ comprised between 0.8 and 2.1 in order to optimize the bandwidth at 850 nm and a length of a second multimode fiber having a value of parameter $\alpha_2$ comprised between the first value $\alpha_1$ and 8 in order to optimize the bandwidth at 1300 nm.

Furthermore, the exact parameter value $\alpha$ is difficult to control during manufacture of the fiber. In order to compensate the profile deviations from a theoretical profile having an optimum value $\alpha$, the document US-B-7,139,457 proposes a concatenation of multimode fibers. The alpha profile of each fiber and the length of each fiber are optimized in order to maximize the bandwidth over a given optical link.

Fiber concatenations for ensuring a compensation of the modal dispersion make the optical systems more complex and increase the cost of these systems. Moreover, these documents are not concerned with the spectral dispersion of the sources used.

Now, the sources used in optical transmission systems are generally not monochromatic. Thus the widely-used vertical-cavity surface-emitting diode lasers, known by the acronym VCSEL, have a wide-spectrum discrete emission. The VCSELs used for high-speed transmissions are generally longitudinally but not transversally single mode, each transverse mode of the laser having its own wavelength corresponding to the various peaks of the emission spectrum. The emission spectrum thus has a spatial dependence.

As indicated above, a multimode fiber has an alpha profile with a value of parameter $\alpha$ optimized for a given wavelength only. Thus, the introduction of a polychromatic optical signal originating from a transverse multimode source in a multimode fiber causes the appearance of a modal dispersion and consequently a reduction in the bandwidth.

Document US2007172182 discloses a method of selecting multimode optical fibers comprising the steps consisting of:

- manufacturing multimode optical fibers each having a graded index profile with a given value of parameter $\alpha$;
- plotting a DMD graph for each of said fibers;
- measuring the dispersion modal delay on the DMD graph for each fiber, the modal dispersion ($DMD_{inner\&outer}$) being measured according to the formula:

$$DMD_{inner\&outer} = (t_{outer} - t_{inner} - \Delta T_{ref})$$

wherein $\Delta T_{ref}$ is the duration of the light pulse, $t_{inner}$ is the point in time at a quarter of the height of the leading edge of the first trace, $t_{outer}$ is the point in time at a quarter of the height of the trailing edge of the last trace; and

- selecting the optical fibers having the lowest $DMD_{inner\&outer}$ value.

Document US-A-2004/0184492 proposes to use only one single transverse mode of a VCSEL source by conditioning the emitted signal before its introduction into the multimode fiber. This signal conditioning is achieved by diffractive elements and/or by offsetting the VCSEL output from the center of the multimode fiber. However, such a conditioning of the signal at the input of the multimode fiber involves a significant degradation of the signal modulation and consequently an increase in the bit error rate (BER).

Document US-A-2005/0078962 proposes to offset the VCSEL output from the center of the multimode fiber in order to introduce the signal into a "large bandwidth zone". Such an offsetting is however difficult to control and has to be adjusted for each fiber. Moreover, it may introduce a power loss which is detrimental to the quality of the transmission.

A need therefore exists for a multimode optical fiber which has a reduced modal dispersion when it is used with a transverse polychromatic and multimode source without requiring conditioning or offsetting of the signal emitted by the source.

To this end, the invention proposes to use the chromatic dispersion of the multimode fiber to compensate for the modal dispersion induced by a polychromatic signal.

In fact, a multimode fiber typically has a chromatic dispersion of the order of -100 ps/nm-km at a wavelength of 850 nm. The chromatic dispersion can vary between -80 and -120 ps/nm-km in the spectral range 840-860 nm. This chromatic dispersion will induce a modal dispersion by further delaying the higher order modes of the fiber which have lower wavelengths since they are mainly excited by the transverse modes having the greatest divergences and therefore also the lowest wavelengths; this dispersion is totally independent of the modal dispersion since the chromatic dispersion depends on the material whereas the modal dispersion depends on the profile of the fiber.

The invention therefore proposes modifying the profile of the multimode fiber by fixing the parameter $\alpha$ at a value different from the optimum value in order to introduce a modal dispersion which will compensate, within the same fiber, the modal dispersion induced by the chromatic dispersion when a transverse polychromatic and multimode source is used.

The invention relates to a method for the selection of multimode optical fibers according to claim 1.

Other characteristics and advantages of the invention will become apparent on reading the following description of the embodiments of the invention, given by way of example and with reference to the attached drawings, which show:

- Figure 1, an emission spectrum of a VCSEL laser;
- Figure 2, a diagrammatic representation of three DMD graphs for a fiber according to the prior art with three monochromatic sources having three different wavelengths;
- Figure 3, a diagrammatic representation of a DMD graph for a fiber according to the prior art with a polychromatic

EP 2 144 096 B1

source having three emitted wavelengths;
- Figure 4, a diagrammatic representation of a DMD graph for a fiber according to the invention with three monochromatic sources having three different wavelengths;
- Figure 5, a diagrammatic representation of a DMD graph for a fiber according to the invention with a polychromatic source having three emitted wavelengths;
- Figure 6, a diagrammatic representation of a transformation of the profile of a fiber according to the invention compared with a profile having an optimized value of parameter $\alpha$;
- Figure 7, a schematic diagram showing the calculation of the delay due to the modal dispersion DMD according to the criteria of the standard FOTP-220;
- Figure 8, a graph illustrating a correlation between the sensitivity of the system and the effective modal bandwidth for multimode fibers according to the invention and for multimode fibers according to the prior art;
- Figure 9, a graph illustrating a correlation between the sensitivity of the system and the effective bandwidth of the fiber for multimode fibers according to the invention and for multimode fibers according to the prior art.

The invention proposes a method for selecting an optimized multimode optical fiber for use with a polychromatic source having several transverse modes, such as a VCSEL laser.

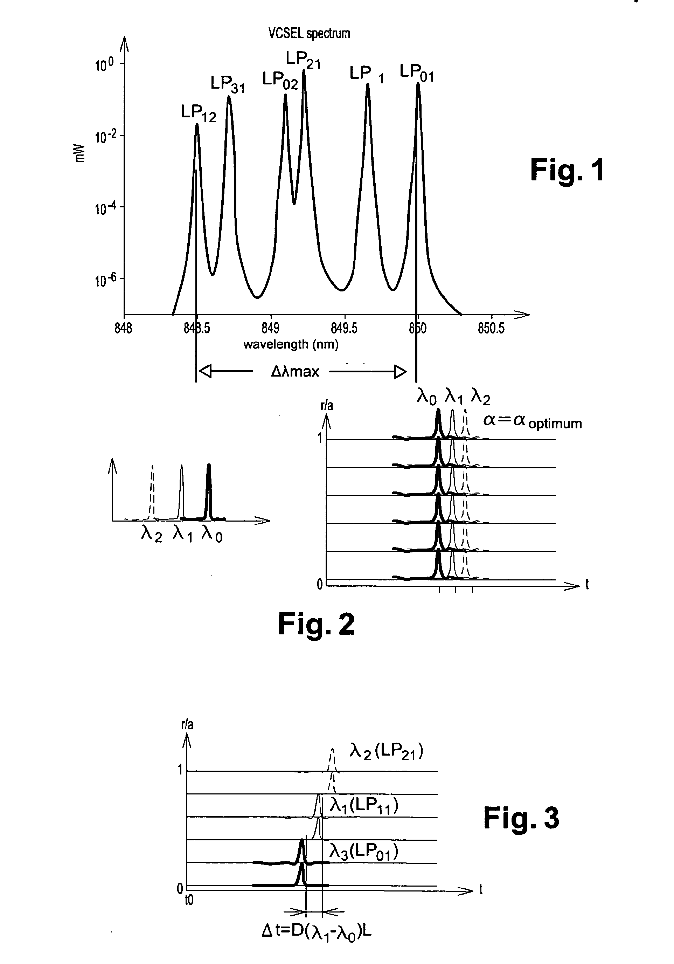

Figure 1 shows an emission spectrum of a VCSEL laser , with a mode centerd on 850 nm for the excitation of the fundamental LP01. Figure 1 shows that each transverse mode of the laser has its own wavelength. The maximum RMS (Root Mean Square) spectral width generally authorized for high-speed transmission is 0.46 nm RMS for the VCSEL (as defined in the standard IEEE 802.3ae).

Thus, when the optical signal emitted by the VCSEL is introduced into the multimode fiber, each transverse mode of the VCSEL will diffract differently: the transverse modes of the highest order diverge more rapidly due to their phase and the spatial distribution of their energy, they will therefore be coupled more specifically in the high order modes of the fiber. It will be recalled that the high order modes of the VCSEL occupy the lowest wavelengths in the spectrum. This spectral and spatial distribution of the VCSEL modes results in the highest order modes of the fibers mostly carrying the lowest wavelengths in the spectrum: the chromatic dispersion will therefore further delay the higher order modes relative to the delay of the fundamental mode.

The chromatic dispersion will thus introduce a modal dispersion referred to by the acronym MCDI for "Modal and Chromatic Dispersion Interferences", resulting in a limitation of the bandwidth.

The modal dispersion induced by the chromatic dispersion can be expressed according to the following equation:

$$\Delta \tau = 2x\Delta \lambda_{RMS} xDxL$$

with $\Delta_T$ being the modal dispersion of the light pulse;
$\Delta\lambda_{RMS}$
which represents a half-width of the emission spectrum of the source;
D, the chromatic dispersion in the multimode fiber, typically -100 ps/nm-km at 850 nm; and
L, the length of the multimode fiber considered.

Now, for high-speed Ethernet transmission network applications over large distances, in particular for speeds greater than or equal to 10 GbE (10 Gb/s) over more than 300 m (respectively 550 m), it is necessary to guarantee an effective bandwidth greater than or equal to 2000 MHz-km (respectively 4700 MHz-km). Standard TIA-492AAAC-A specifies the required performances for 50 $\mu$m diameter high-speed multimode fibers. In the case of multimode fibers, the bandwidth depends on the source used. The effective modal bandwidth (EMB) corresponds to the bandwidth of the source-fiber pair when the chromatic dispersion is disregarded. The effective bandwidth (denoted by the acronym EB) corresponds to the bandwidth of the fiber when both the modal dispersion and the chromatic dispersion are taken into account.

In a manner known *per se*, the effective modal bandwidth EMB can be estimated by a measurement of the delay due to the modal dispersion, known under the acronym DMD for "Dispersion Modal Delay" graphical representation. The DMD measurement procedure has been the subject of standardization (IEC 60793-1-49 and FOTP-220). To carry out this measurement, care is generally taken to use a source or a fiber length such that the chromatic dispersion is actually negligible: the purpose is to characterize the modal dispersion of the fiber.

A DMD graphical representation is obtained by injecting a light pulse having a given wavelength $\lambda_0$ at the center of the fiber and by measuring the pulse delay after a given fiber length L; the introduction of the light pulse of given wavelength $\lambda_0$ being radially offset to cover the entire core of the multimode fiber. When the parameter $\alpha$ is set to an optimum value $\alpha_{optimum}$, there is virtually no shift in the light pulse delay for a given wavelength $\lambda_0$ regardless of the radius r along which the pulse propagates; the intermodal dispersion is low and the effective modal bandwidth is significant.

4

However, this alignment on the DMD graphical representation of the light pulse delays, regardless of the radius r, are valid only for a given wavelength $\lambda_0$ for a given value of parameter $\alpha$, $\alpha_{optimum}$.

Figure 2 illustrates three diagrams of DMD graphs of a multimode fiber according to the prior art obtained with three sources having three different wavelengths, measured according to the recommendations of standards IEC 60793-1-49 and FOTP-220. The graph in Figure 2 clearly shows that each pulse has the same delay after a given length of fiber whatever the radial injection point of the signal (r/a). The modal dispersion is therefore virtually zero for a given signal wavelength. However, the graph in Figure 2 also shows clearly that the pulses do not have the same delay depending on their wavelength. This dependence of the delay with the effective wavelength on the signal is well known by the actual definition of chromatic dispersion.

When a polychromatic emission source having several transverse modes is used, a modal dispersion is introduced despite the optimization of parameter $\alpha$. Figure 3 shows an explanatory diagram of the DMD traces of a multimode fiber according to the prior art with a source presenting three transverse modes having three distinct wavelengths (it is understood that the source could have more than three transverse modes; the description being limited to three for obvious reasons of clarity of the disclosure).

The graph of Figure 3 clearly shows that the delay of the LP01 mode of the VCSEL after propagation over a distance L of fiber is not the same as the delay of the LP11 or LP21 mode of the VCSEL. These different propagation times between the VCSEL modes constituting the optical signal, even given that the value of parameter $\alpha$ is optimized for a reduced modal dispersion, result from the fact that the different modes do not have exactly the same propagation wavelength and consequently the chromatic dispersion of the fiber induces an additional difference in group velocity between the modes of the fiber which does not appear in a DMD measurement since it is dependent on the VCSEL spectrum. A modal dispersion is therefore induced in the fiber by the chromatic dispersion (MCDI) when the light signal injected at the input has several transverse modes each having a different wavelength.

The delay induced by the chromatic dispersion between two transverse modes of fibers with respective wavelengths $\lambda_1$ and $\lambda_0$ is given by the following equation:

$$\Delta \tau = \left( \lambda_1 - \lambda_0 \right) x D x L$$

For a spectral spacing of 1 nm and a dispersion of -100ps/nm-km, delays of 0.1ps/m are obtained, i.e. of the same order of magnitude as the modal dispersion of a fiber having an EMB of 5000 MHz-km. The modal dispersion induced in the fiber by the chromatic dispersion (MCDI) is therefore not negligible.

This modal dispersion induced by the chromatic dispersion will be added to the modal dispersion induced by the refractive index profile. It is independent of the profile of the fiber since the chromatic dispersion essentially depends on the material of the optical wave guide.

The invention consequently proposes introducing into the multimode fiber a modal dispersion which can compensate for the modal dispersion induced by the chromatic dispersion. The compensation of the modal dispersion is carried out in the same fiber; there is therefore no concatenation of fibers

The invention in particular proposes choosing a value of parameter $\alpha$ which is different from the optimum value for introducing a non-zero modal dispersion into the multimode fiber for a given wavelength in order that the modal dispersion of an optical link over which a polychromatic signal is propagated is substantially zero.

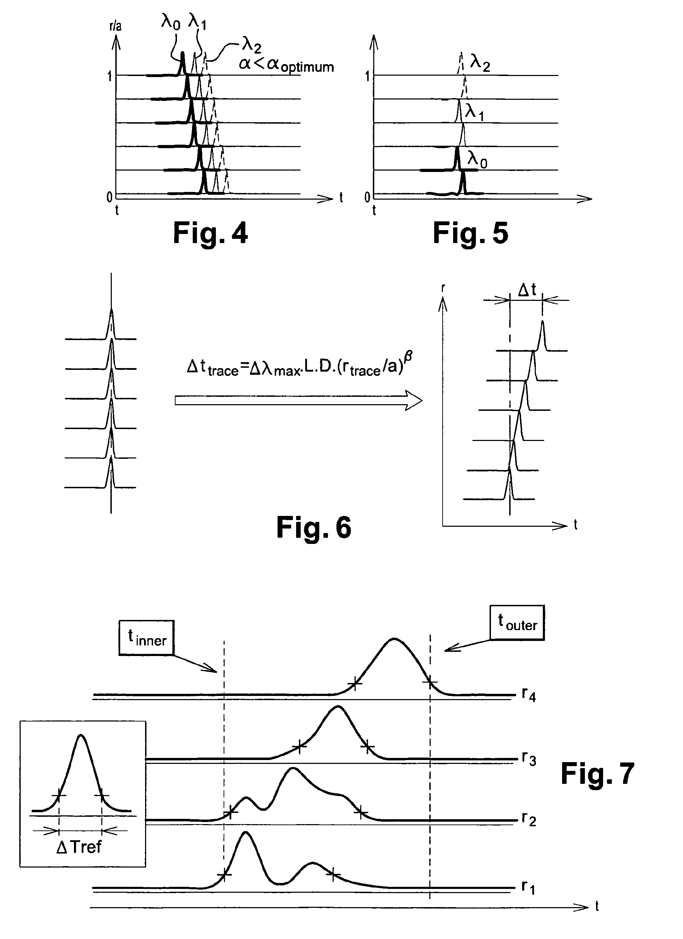

Figure 4 shows three diagrams of DMD graphs of a multimode fiber obtained with three monochromatic sources having three different wavelengths, measured according to the recommendations of standards IEC 60793-1-49 and FOTP-220.

Figure 7 illustrates a schematic diagram of the calculation of the delay due to the modal dispersion DMD according to the criteria of the standard FOTP-220 as published in its version TIA SCFO-6.6 of 22nd November 2002.

A light pulse is injected at different radial positions ($r_1$, $r_2$, $r_3$, $r_4$) with respect to the center of the multimode optical fiber core. The width of the pulse $\Delta T_{ref}$ is measured at a quarter of the height generally at the output of the fiber of length L. The delay due to the modal dispersion $DMD_{inner\&outer}$ is then measured between a first point in time $t_{inner}$ at a quarter of the height of the leading edge of the first trace $r_1$ and a second point in time $t_{outer}$ at a quarter of the height of the trailing edge of the last trace $r_4$. The value of $DMD_{inner\&outer}$ is then defined according to the following relationship:

$$DMD_{inner\&outer} = (t_{outer} - t_{inner} - \Delta T_{ref}) / L$$

The graph of Figure 4 clearly shows that a modal dispersion has been introduced into the fiber for a particular wavelength $\lambda_0$, $\lambda_1$, $\lambda_2$. This modal dispersion is caused by the graded index profile which does not allow the same velocity of propagation of all the modes. This modal dispersion is however controlled in order to compensate for the modal dispersion induced by the chromatic dispersion MCDI in this same fiber when the optical signal being propagated is polychromatic.

Figure 5 shows a DMD graph diagram of a multimode fiber with a polychromatic source having three transverse modes having three distinct wavelengths. It should be noted that the modal dispersion is then substantially zero; the modal dispersion induced by the chromatic dispersion has been compensated for by the modal dispersion due to the choice of the parameter $\alpha$ of the profile.

Figure 6 illustrates diagrammatically the principle of the transformation of the DMD graph for a fiber, according to the invention. The value of parameter $\alpha$ of the fiber is chosen such that the multimode fiber has, at a given wavelength, a dispersion modal delay (DMD) which is controlled at each radial point of the fiber.

The term "delay" $\Delta t$ is used in this case to designate the time lag between a light pulse after propagation over a given length L of fiber at a distance r from the center of the fiber and a light pulse of the same wavelength being propagated over the same length L at the center of the fiber; it is however understood that this "delay" can just as well be an "advance" in that the light pulse being propagated at a distance r from the center of the fiber can arrive before the light pulse being propagated at the center of the fiber.

The multimode optical fiber selected according to the invention has a graded index profile with a value of parameter $\alpha$ optimized such that a DMD measurement carried out according to the criteria of the standard FOTP-220 with a light pulse duration $\Delta T_{ref}$ at a quarter of the height at the end of the fiber having length L, such that $\Delta T_{Ref}/L = 0.11$ ps/m and for which the DMD graph has been modified as follows give an equivalent modal dispersion value of less than 0.11 ps/m. By "equivalent modal dispersion" is meant the delay taking account of the chromatic dispersion, measured starting from a modified DMD graph and calculated according to the method defined in the standard FOTP-220 described with reference to Figure 7.

The DMD graph is modified by adding a delay $\Delta t_{trace}$ to each trace according to the equation :

$$\Delta t_{trace} = \Delta \lambda_{max} xDxL \left( \frac{r_{trace}}{a} \right)^{\beta}$$

with $r_{trace}$ being the center position of the injection of the light pulse corresponding to the trace measured, $a$ being the core radius of the multimode fiber, $\Delta\lambda_{max}$ being the maximum spectral width of the source which can be used with the fiber; $D$ being the chromatic dispersion of the multimode fiber at the emission wavelength of the source and L being the length of the optical link.

From such a modified DMD graph, the equivalent modal dispersion is calculated according to the equation defined by the standard FOTP-220 :

$$DMD_{inner\&outer} = (t_{outer} - t_{inner} - \Delta T_{ref}) / L$$

The invention proposes optimizing the value of parameter $\alpha$ of the multimode fiber for applications in which the chromatic dispersion cannot be disregarded, i.e. when the source used is a transverse multimode source and when the fiber length is such that the chromatic dispersion induces a modal dispersion which cannot be ignored. The modification of the DMD graph for calculating an equivalent modal dispersion will be carried out only for source - fiber pairs verifying the equation : $(\Delta\lambda_{max} \times D) > 0.07$ ps/m; i.e. for the fibers intended to be used with sources having a non negligible spectral width.

The modification of the DMD graph to take account of the chromatic dispersion makes it possible to guarantee a calculated effective bandwidth EBc greater than 6000 MHz-km for multimode fibers used with transverse multimode sources.

The coefficient $\beta$ of the relationship adding a delay $\Delta t_{trace}$ to each trace of the DMD graph can be larger than or equal to 1, preferably equal to 1 or 2; the delay added to each trace must make it possible to compensate the delay of the edge modes with respect to the central modes induced by the chromatic dispersion.

The dispersion modal delay imposed in the fiber selected according to the invention by the choice of the parameter $\alpha$ compensates for the advance induced by the chromatic dispersion for a given wavelength.

The fiber selected according to the invention is optimized for use with a given polychromatic emission source having several transverse modes and for an optical link of given length.

The maximum spectral width of the source can be comprised between 1 nm and 2 nm. Most of the commercially available VCSELs have an RMS (Root Mean Square) spectral width measured as a standard deviation relative to the wavelength of greatest power comprised between 0 and 0.46 nm; a value ARMS of 0.46 nm would lead to a maximum spectral width $\Delta\lambda_{max}$ of the order of 2 nm.

Multimode fibers are typically used for short-distance applications and local networks; the fiber lengths typically used are comprised between a few metres and several hundred metres. In such a context, the modal dispersion induced by the chromatic dispersion remains limited and it is possible to compensate for it by a fiber profile with an optimized graded index.

Tests carried out by the applicant have shown that the fiber selected according to the invention surprisingly has better system performances when the chromatic dispersion is non negligible. Tests have been carried out with a source having an RMS spectral width of 0.33 nm and a great length of multimode fiber (750 m). The effective bandwidths EBc calculated after modification of the DMD graph according to the invention are effectively better correlated with the system performances than are the effective modal bandwidths EMBc not taking the chromatic dispersion into account.

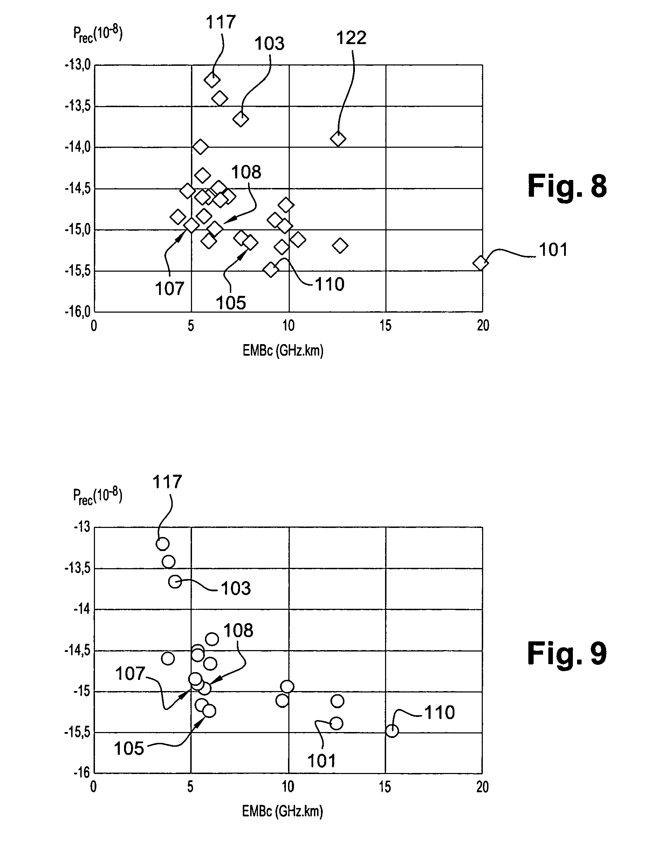

Figures 8 and 9 show graphs which refer to the tests carried out by the applicant; these graphs illustrate the sensitivity of an optical system for multimode fibers according to whether account is (Figure 9) or is not (Figure 8) taken of the chromatic dispersion.

Figure 8 shows the correlation between the power received ($P_{rec}$) by an optical receiver for a binary error rate (BER) of $10^{-8}$ and the calculated effective modal bandwidth (EMBc) without modification of the DMD graph to take account of the chromatic dispersion. Figure 9 shows the correlation between the power received ($P_{rec}$) by an optical receiver for a binary error rate (BER) of $10^{-8}$ and the calculated effective bandwidth (EBc) from the DMD graph modified to take account of the chromatic dispersion.

The sources used for the simulations of Figures 8 and 9 are VCSELs and a maximum spectral width value $\Delta\lambda_{max}$ of 1,1 nm and a length of fiber L of 750 m have been chosen to carry out the calculations. A chromatic dispersion value D of -100 ps/nm-km was considered in the calculation of the delay $\Delta t_{trace}$.

It should be noted that, typically, the BER is a function of the bandwidth of the fiber. There is a strong theoretical correlation between the two. The bandwidth is the result of the chromatic dispersion and the modal dispersion. When the source is defined, the value of the chromatic dispersion bandwidth is fixed. It is therefore naturally expected that the binary error rate is now no longer only a function of the modal dispersion. Two fibers having the same modal dispersion but a different alpha for example, should have the same BER. Now, Figure 8 shows that two fibers having the same EMBc value have significantly different penalties (fibers 117 and 103 versus fibers 105, 107 and 108 for example). Similarly, fiber 101 which has an EMBc value clearly greater than the others does not have a better system performance than fiber 110 for example. Selection of the multimode fibers purely according to the effective modal bandwidth EMB criterion is therefore not optimum for system applications with polychromatic sources having multiple transverse modes.

The fact of "simulating" the effect of the chromatic dispersion, knowing the coupling mechanism between a VCSEL and a multimode fiber, by artificially modifying the delay times on the DMD graph according to the formula :

$$\Delta t_{trace} = \Delta\lambda_{max} \, x D x L \left(\frac{r_{trace}}{a}\right)^{\beta}$$

makes it possible to effectively compensate for the modal dispersion induced by the chromatic dispersion in order to achieve an equivalent modal dispersion value at the end of the fiber of less than 0.11 ps/m and an effective bandwidth greater than 6000 MHz-km.

Figure 9 thus shows that fibers 103 and 117 have a narrower effective bandwidth EB than fibers 105, 107 and 108, which is commensurate with the fact that their system performances are less good but which was not apparent in Figure 8 where fibers 103, 105, 107, 108 and 117 all have a substantially equal bandwidth and would have been considered as being of the same quality. Similarly, fibers 101 and 110 have close bandwidth values for similar system performances which was not the case in Figure 8 where fiber 101 seemed to be clearly better than fiber 110.

The invention therefore makes it possible to select multimode optical fibers having optimum system performances. The selection of the fibers can take place in the following manner.

Multimode optical fibers are manufactured according to any known technique. Each multimode optical fiber has a graded index profile with a given value of parameter $\alpha$. A measurement of the dispersion modal delay is carried out for each fiber, starting from a DMD graph plotted for each fiber. This modal dispersion can be measured according to the recommendations of the standard FOTP-220, i.e. the modal dispersion $DMD_{inner\&outer}$ is measured at a quarter of the height of the leading edge of the first trace and at a quarter of the height of the trailing edge of the last trace. Each DMD graph of each fiber is then modified by adding a delay $\Delta t_{trace}$ to each trace:

$$\Delta t_{trace} = \Delta \lambda_{max} xDxL \left( \frac{r_{trace}}{a} \right)^{\beta}$$

where $r_{trace}$ is the center position of the injection of the light pulse corresponding to the trace, $a$ is the core radius of the multimode fiber, $D$ is the chromatic dispersion of the multimode fiber at the wavelength of the light pulse, and $\Delta\lambda_{max}$ is the maximum spectral width of the source intended to be used with the fiber.

Then the multimode optical fibers which have an equivalent modal dispersion value measured on the modified DMD graph of less than 0.11 ps/m are selected. The use of such fibers makes it possible to produce high-speed Ethernet transmission networks over great distances having very good performances, with a distance by Gigabit Ethernet speed product greater than 3000 Gb/s.m for example.

Of course, the present invention is not limited to the embodiments described by way of example. In particular, the fiber selected according to the invention can be used in combination with any type of polychromatic source having several transverse modes other than a VCSEL, for example light-emitting diodes (LEDs).

**Claims**

1.  A method for selecting multimode optical fibers comprising the steps consisting of:

    - manufacturing multimode optical fibers each having a graded index profile with a given value of parameter $\alpha$;
    - plotting a dispersion modal delay (DMD) graph for each fiber,
    - measuring the dispersion modal delay on said DMD graph plotted for each fiber, the modal dispersion being measured at a quarter of the height of the leading edge of the first trace and at a quarter of the height of the trailing edge of the last trace;
    - modifying the DMD graph of each fiber by adding a delay ($\Delta t_{trace}$) to each trace:

$$\Delta t_{trace} = \Delta \lambda_{max} xDxL \left( \frac{r_{trace}}{a} \right)^{\beta}$$

    where $r_{trace}$ is the center position of the injection of the light pulse corresponding to the trace,
    a is the core radius of the multimode fiber,
    L is the length of the multimode optical fiber,
    $\beta$ is the coefficient of the delay,
    $D$ is the chromatic dispersion of the multimode fiber at the wavelength of the light pulse, and
    $\Delta\lambda_{max}$ is the maximum spectral width of a source intended to be used with the fiber,
    - calculating the equivalent dispersion modal delay on the modified DMD graph for each fiber, the equivalent modal dispersion ($DMD_{inner\&outer}$) being calculated according to the formula:

$$(DMD_{inner\&outer}) = (t_{outer} - t_{inner} - \Delta T_{ref}) / L),$$

    wherein
    $\Delta T_{ref}$ = the duration of the light pulse,
    $t_{inner}$ = the point in time at a quarter of the height of the leading edge of the first trace,
    $t_{outer}$ = the point in time at a quarter of the height of the trailing edge of the last trace, and
    L = the length of the fiber,
    - selecting the multimode optical fibers having an equivalent dispersion modal delay of less than 0.11 ps/m for ($\Delta\lambda_{max}$ x D) > 0.07 ps/m for $\Delta T_{ref}/L$ = 0,11 ps/m.

2.  A method of using a multimode optical fibre in an optical system comprising:

- selecting a multimode optical fiber according to the method of claim 1;
- providing a polychromatic optical source emitting multiple transverse modes with a maximum spectral width ($\Delta\lambda_{max}$);
- providing an optical link comprising at least one portion of said multimode optical fiber thus selected.

3. The method according to any one or more of the preceding claims, wherein said multimode optical fiber has a chromatic dispersion comprised between

- 80 ps/nm-km and -120 ps/nm-km for wavelengths comprised between 840 nm and 860 nm.

4. The method according to any one or more of the preceding claims, wherein the coefficient β of the delay ($\Delta t_{trace}$) of said multimode optical fiber added to each trace is equal to 1.

5. The method according to any one or more of the claims 1-3, wherein the coefficient β of the delay ($\Delta t_{trace}$) of said multimode optical fiber added to each trace is equal to 2.

6. The method according to any one or more of the preceding claims, wherein said multimode optical fiber has a calculated effective bandwidth (EBc) greater than 6000 MHz-km.

7. The method according to any one or more of the preceding claims, wherein β is larger than or equal to 1, preferably β is 1 to 2.

8. The method according to any one or more of the claims 2-7, wherein the maximum spectral width of the source ($\Delta\lambda_{max}$) is comprised between 1 nm and 2 nm.

9. The method according to any one or more of the claims 2-8, wherein the source is a surface emitting laser (VCSEL) or a light-emitting diode (LED).

10. The method according to any one or more of the claims 2-9, wherein a distance by Gigabit Ethernet speed product is greater than 3000 Gb/s.m.


**Patentansprüche**

1. Verfahren zur Auswahl von Multimodefasern mit den Schritten bestehend aus:

- Herstellen von Multimodefasern, wobei jede ein Gradientenindexprofil mit einem gegebenen Wert des Parameters α aufweist;
- Aufzeichnen eines Modendispersionsverzögerungs- (MDV) Graphen für jede Faser;
- Messen der Modendispersionsverzögerung an dem für jede Faser aufgezeichneten MDV-Graphen, wobei die Modendispersion bei einem Viertel der Höhe der ansteigenden Flanke des ersten Signals und bei einem Viertel der Höhe der abfallenden Flanke des letzten Signals gemessen wird;
- Modifizieren des MDV-Graphen jeder Faser, indem eine Verzögerung ($\Delta t_{trace}$) zu jedem Signal addiert wird:

$$\Delta t_{\text{trace}} = \Delta\lambda_{\max} \; x \, D \; x \, L \left(\frac{r_{trace}}{a}\right)^{\beta}$$

wobei $r_{trace}$ die Nulllage der Einleitung des Lichtpulses des zugehörigen Signals ist,
a der Kernradius der Multimodenfaser ist,
L die Länge der Multimodenfaser ist,
β der Koeffizient der Verzögerung ist,
D die chromatische Dispersion der Multimodenfaser bei der Wellenlänge des Lichtpulses ist, und
$\Delta\lambda_{max}$ die maximale spektrale Breite einer für die Verwendung mit der Faser gedachten Quelle ist,
- Berechnen der entsprechenden Modendispersionsverzögerung am modifizierten MDV-Graphen jeder Faser, wobei die entsprechende Modendispersionsverzögerung (MDV$_{inner\&outer}$) nach folgender Formel berechnet wird:

$$(MDV_{inner\&outer}) = (t_{outer} - t_{inner} - \Delta T_{ref}) / L),$$

wobei
$\Delta T_{ref}$ = die Dauer des Lichtpulses,
$t_{inner}$ = der Zeitpunkt bei einem Viertel der Höhe der ansteigenden Flanke des ersten Signals,
$t_{outer}$ = der Zeitpunkt bei einem Viertel der Höhe der abfallenden Flanke des letzten Signals, und
L = die Länge der Faser,
- Auswählen der Multimodenfasern mit einer entsprechenden Modendispersionsverzögerung von weniger als 0,11 ps/m für $(\Delta\lambda_{max}$ x D$) > 0,07$ ps/m bei $\Delta T_{ref}/L = 0,11$ ps/m.

2. Verfahren zur Verwendung einer Multimodenfaser in einem optischen System mit den Schritten:

- Auswählen einer Multimodenfaser gemäß dem Verfahren nach Anspruch 1;
- Bereitstellen einer polychromen optischen Quelle, welche mehrere Transversalmoden mit einer maximalen spektralen Breite ($\Delta\lambda_{max}$) emittiert;
- Bereitstellen eines optischen Verbindungselements, das zumindest einen Teil der auf diese Weise ausgewählten Multimodenfaser umfasst.

3. Verfahren nach einem oder mehreren der vorhergehenden Ansprüche, wobei die Multimodenfaser für Wellenlängen zwischen 840 nm und 860 nm eine chromatische Dispersion aufweist, die zwischen -80 ps/nm-km und -120 ps/nm-km beträgt.

4. Verfahren nach einem oder mehreren der vorhergehenden Ansprüche, wobei der Koeffizient β der Verzögerung ($\Delta t_{trace}$) der Multimodenfaser, der zu jedem Signal addiert wird, gleich 1 beträgt.

5. Verfahren nach einem oder mehreren der Ansprüche 1 bis 3, wobei der Koeffizient β der Verzögerung ($\Delta t_{trace}$) der Multimodenfaser, der zu jedem Signal addiert wird, gleich 2 beträgt.

6. Verfahren nach einem oder mehreren der vorhergehenden Ansprüche, wobei die Multimodenfaser eine berechnete effektive Bandweite (EBb) von größer als 6000 MHz-km aufweist.

7. Verfahren nach einem oder mehreren der vorhergehenden Ansprüche, wobei β größer oder gleich 1 beträgt, wobei β vorzugsweise 1 bis 2 beträgt.

8. Verfahren nach einem oder mehreren der Ansprüche 2 bis 7, wobei die maximale spektrale Breite der Quelle ($\Delta\lambda_{max}$) zwischen 1 nm und 2 nm beträgt.

9. Verfahren nach einem oder mehreren der Ansprüche 2 bis 8, wobei die Quelle ein Oberflächenemitter (VCSEL) oder eine Leuchtdiode (LED) ist.

10. Verfahren nach einem oder mehreren der Ansprüche 2 bis 9, wobei ein Ergebnis von Entfernung mal Gigabit Ethernet Geschwindigkeit größer als 3000 Gb/s.m beträgt.

**Revendications**

1. Procédé de sélection de fibres optiques multimodes qui comprend les étapes qi consistent à :

- fabriquer des fibres optiques multimodes qui possèdent chacune un profil d'indice classé avec une valeur de paramètre α ;
- créer un graphique de retard modal de dispersion (DMD) pour chaque fibre,
- mesurer le retard modal de dispersion sur ledit graphique créé pour chaque fibre, la dispersion modale étant mesurée à un quart de la hauteur du bord d'attaque de la première trace, et à un quart de la hauteur du bord de fuite de la dernière trace ;
- modifier le graphique DMD de chaque fibre en ajoutant un retard ($\Delta t_{trace}$) à chaque trace :

$$\Delta t_{trace} = \Delta \lambda_{max} \, xDxL \left( \frac{r_{trace}}{a} \right)^{\beta}$$

où $r_{trace}$ correspond à la position centrale de l'injection de l'impulsion lumineuse qui correspond à la trace,

a correspond au rayon principal de la fibre multimodes,

L correspond à la longueur de la fibre optique multimodes,

$\beta$ correspond au coefficient de retard,

D correspond à la dispersion chromatique de la fibre multimodes à la longueur d'onde de l'impulsion lumineuse, et

$\Delta \lambda_{max}$ correspond à la largeur spectrale maximale d'une source destinée à être utilisée avec la fibre,

- calculer le retard modal de dispersion équivalent sur le graphique DMD modifié pour chaque fibre, la dispersion modale équivalente ($DMD_{inner\&outer}$) étant calculée selon la formule :

$$(\mathrm{DMD}_{inner\&outer}) = (\mathrm{t}_{outer} - \mathrm{t}_{inner} - \Delta\mathrm{T}_{ref})/\mathrm{L},$$

où

$\Delta T_{ref}$ = durée de l'impulsion lumineuse,

$t_{inner}$ = moment qui se trouve à un quart de la hauteur du bord d'attaque de la première trace,

$t_{outer}$ = moment qui se trouve à un quart de la hauteur du bord de fuite de la dernière trace, et

L = longueur de la fibre,

- sélectionner les fibres optiques multimodes qui possèdent un retard modal de dispersion équivalent inférieur à 0,11 ps/m pour ($\Delta\lambda_{max} \times D$) > 0,07 ps/m pour $\Delta T_{ref}/L$ = 0,11 ps/m.

2. Procédé d'utilisation d'une fibre optique multimodes dans un système optique, qui comprend :

- la sélection d'une fibre optique multimodes selon le procédé de la revendication 1 ;
- le fait de prévoir une source optique polychrome qui émet plusieurs modes transversaux avec une largeur spectrale maximale ($\Delta\lambda_{max}$) ;
- le fait de prévoir une liaison optique qui comprend au moins une partie de ladite fibre optique multimodes sélectionnée.

3. Procédé selon l'une quelconque des revendications précédentes, dans lequel ladite fibre optique multimodes possède une dispersion chromatique comprise entre -80 ps/nm-km et -120 ps/nm-km pour des longueurs d'onde comprises entre 840 nm et 860 nm.

4. Procédé selon l'une quelconque des revendications précédentes, dans lequel le coefficient $\beta$ du retard ($\Delta t_{trace}$) de ladite fibre optique multimodes ajouté à chaque trace est égal à 1.

5. Procédé selon l'une quelconque des revendications 1 à 3, dans lequel le coefficient $\beta$ du retard ($\Delta t_{trace}$) de ladite fibre optique multimodes ajouté à chaque trace est égal à 2.

6. Procédé selon l'une quelconque des revendications précédentes, dans lequel ladite fibre optique multimodes possède une bande passante effective calculée (EBc) supérieure à 6000 MHz-km.

7. Procédé selon l'une quelconque des revendications précédentes, dans lequel $\beta$ est supérieur ou égal à 1, et, de préférence, $\beta$ est égal à 1 ou 2.

8. Procédé selon l'une quelconque des revendications 2 à 7, dans lequel la largeur spectrale maximale de la source ($\Delta\lambda_{max}$) est comprise entre 1 nm et 2 nm.

9. Procédé selon l'une quelconque des revendications 2 à 8, dans lequel la source est un laser à émission de surface (VCSEL) ou une diode électroluminescente (LED).

10. Procédé selon l'une quelconque des revendications 2 à 9, dans lequel une distance par produit de vitesse Ethernet en giga-octets est supérieure à 3000 Go/s.m.

VCSEL spectrum

**Fig. 1**

**Fig. 2**

**Fig. 3**

$$\Delta t = D(\lambda_1 - \lambda_0)L$$

**Fig. 4**

**Fig. 5**

$$\Delta t_{trace} = \Delta\lambda_{max} \cdot L.D. \cdot (r_{trace}/a)^{\beta}$$

**Fig. 6**

**Fig. 7**

**Fig. 8**

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6363195 B
- US 7139457 B
- US 2007172182 A
- US 20040184492 A
- US 20050078962 A

**Non-patent literature cited in the description**

- **D. GLOGE et al.** Multimode theory of graded-core fibres. *Bell System Technical Journal,* 1973, 1563-1578
- **OLSHANSKY et al.** Pulse broadening in graded-index optical fibers. *Applied Optics,* February 1976, vol. 15 (2